# EUROPÄISCHE PATENTSCHRIFT

(11) **EP 1 347 926 B1**
(45) Veröffentlichungstag und Bekanntmachung des Hinweises auf die Patenterteilung: **18.08.2004**
(21) Anmeldenummer: 01994668.0
(22) Anmeldetag: 16.11.2001
(51) Int. Cl.: B65G 49/04

(54) **ANLAGE ZUM BEHANDELN, INSBESONDERE ZUM LACKIEREN, VON GEGENSTÄNDEN, INSBESONDERE VON FAHRZEUGKAROSSERIEN**
TREATMENT PLANT, IN PARTICULAR FOR PAINTING OBJECTS, IN PARTICULAR VEHICLE BODIES
DISPOSITIF DE TRAITEMENT, NOTAMMENT DE PEINTURE, D'OBJETS, NOTAMMENT DE CAROSSERIES AUTOMOBILES

(30) Priorität: 05.01.2001 DE 10100377
(43) Veröffentlichungstag der Anmeldung: 01.10.2003
(73) Patentinhaber: EISENMANN MASCHINENBAU KG, 71032 Böblingen (DE)
(72) Erfinder: EHRENLEITNER, Franz, 70439 Stuttgart (DE); WEINAND, Hans-Joachim, 71254 Ditzingen (DE)
(74) Vertreter: Ostertag, Ulrich, Dr.
(86) Internationale Anmeldenummer: PCT/EP2001/013289
(87) Internationale Veröffentlichungsnummer: WO 2002/053482

(56) Entgegenhaltungen:
- DE-A- 19 641 048
- FR-A- 2 581 977

## Beschreibung

Die Erfindung betrifft eine Anlage zum Behandeln, insbesondere zum Lackieren, von Gegenständen, insbesondere von Fahrzeugkarosserien, mit
a) mindestens einem Bad, in dem sich eine Behandlungsflüssigkeit, insbesondere ein Lack befindet, in welche die Gegenstände eingetaucht werden sollen;
b) einer Fördereinrichtung, mit welcher die Gegenstände in einer kontinuierlichen oder intermittierenden Translationsbewegung durch die Anlage geführt werden können;
c) einer Vielzahl von Eintaucheinrichtungen, die auf einer über eine Verbindungsstruktur mit der Fördereinrichtung verbundenen Tragstruktur jeweils einen Gegenstand tragen und in der Lage sind, diesen Gegenstand in das Bad einzutauchen.

Eine derartige Anlage ist in der DE 196 41 048 C2 beschrieben. Bei dieser sind die Eintaucheinrichtungen so ausgebildet, daß die zu behandelnden Gegenstände, im dargestellten Ausführungsbeispiel zu lackierende Fahrzeugkarosserien, unter Überlagerung der Translationsbewegung und einer Drehbewegung um eine senkrecht zur Transportrichtung ausgerichtete Achse in die Bäder eingetaucht und aus dieser wieder herausgehoben werden. Die Verbindungsstrukturen dieser Eintaucheinrichtungen sind dabei in sich starre Haltegestelle, in deren in der Normalposition unterem, mittlerem Bereich sich eine einzige Drehachse für die Drehbewegung befindet. Sinn dieser Anordnung ist es, auf einem verhältnismäßig kurzen Weg der Translationsbewegung die zu behandelnden Gegenstände in die Bäder vollständig eintauchen zu können, so daß die Stirnwände der Bäder steil und die Bäder insgesamt kurz sein können. Nachteilig ist, daß die zu behandelnden Gegenstände vollständig "auf den Kopf" gestellt werden müssen. Dies erfordert bei Gegenständen, die ein erhebliches Gewicht aufweisen, sehr aufwendige Halterungsgestelle und große Kräfte. Handelt es sich bei den zu behandelnden Gegenständen um Fahrzegkarosserien, müssen deren bewegliche Teile, zum Beispiel Türen, Kofferraum- und Motorhauben, gegen ein Aufklappen gesichert werden. Außerdem lassen diese bekannten Eintaucheinrichtungen nur eine einzige Kinematik der Eintauchbewegung, eben die Drehbewegung, zu, was für viele Gegenstände, die hierfür ungünstige Geometrien aufweisen, nicht optimal ist.

Aufgabe der vorliegenden Erfindung ist es, eine Anlage der eingangs genannten Art so weiterzubilden, daß unter Verwendung von im wesentlichen gleich kurzen Bädern eine Drehung der zu behandelnden Gegenstände um 180° nicht erforderlich und die Kinematik des Eintauchvorganges ggf. variabler gestaltet werden kann.

Diese Aufgabe wird erfindungsgemäß dadurch gelöst, daß
d) die Verbindungsstruktur mindestens ein Lenkgestänge aufweist, das seinerseits umfaßt:
   da) zwei in Abstand voneinander angeordnete Lenker, die am einen Ende gelenkig mit der Fördereinrichtung und am anderen Ende gelenkig mit der Tragstruktur verbunden sind;
   db) mindestens eine Einrichtung, mit welcher mindestens einer der beiden Lenker des Lenkgestänges um seine Anlenkachse an der Fördereinrichtung verdreht werden kann.

Erfindungsgemäß wird also innerhalb der Verbindungsstruktur, die jede Eintaucheinrichtung aufweist, ein Lenkgestänge verwendet, das eine präzise Führung der zu behandelnden Gegenstände auch in ihrer Orientierung gegenüber der Horizontalen möglich macht. Schlüssel hierbei sind zwei in Abstand voneinander angeordnete Lenker, welche die Fördereinrichtung mit der Tragstruktur verbinden. Wird mindestens einer dieser Lenker um die Anlenkachse verdreht, die seiner gelenkigen Verbindung mit der Fördereinrichtung entspricht, folgt das gesamte Lenkgestänge mit einer Kinematik, die der Auslegung dieses Lenkgestänges im einzelnen entspricht. In jedem Falle kann die Stelle, an welcher der verdrehbare Lenker an der Tragstruktur angelenkt ist, um eine Höhendifferenz bewegt werden, die der doppelten Länge dieses Lenkers entspricht.

Im einfachsten Falle sind beide Lenker des Lenkgestänges starre, einstückige Teile. Das Lenkgestänge wird so zu einer Art Parallelogrammführung, bei welcher zwei Seiten des Parallelogrammes durch die beiden Lenker, eine Seite durch die Fördereinrichtung und eine Seite durch die Tragstruktur gebildet sind. Wird mindestens einer der beiden Lenker z.B. durch einen Motor verdreht, so verändert sich die Höhe des Parallelogramms; der von der Tragstruktur gehaltene Gegenstand durchläuft eine Vertikalbewegung, bei der es sich entweder um eine Eintauch- oder um eine Austauchbewegung handeln kann. Der Gegenstand selbst behält dabei seine ursprüngliche Orientierung gegenüber der Horizontalen bei. Die Richtung und Geschwindigkeit, mit welcher der Lenker verdreht wird, können so auf die Translationsbewegung der gesamten Eintaucheinrichtung abgestimmt werden, daß der Gegenstand praktisch senkrecht in das Bad eingetaucht bzw. aus dem Bad herausgehoben wird.

Sehr viel variabler ist diejenige besonders bevorzugte Ausführungsform der Erfindung, bei welcher einer der beiden Lenker des Lenkgestänges aus zwei beweglich miteinander verbundenen Lenkgliedern besteht und beiden Lenkern jeweils eine Einrichtung zugeordnet ist, mit welcher der jeweilige Lenker unabhängig vom anderen Lenker um seine Anlenkachse an der Fördereinrichtung verdreht werden kann.

Diese Ausführungsform der Erfindung läßt eine Vielzahl von Eintauch- und Austauchkinematiken der Gegenstände in die Bäder und aus den Bädern zu. Dadurch, daß einer der beiden Lenker aus zwei beweglich miteinander verbundenen Lenkgliedern zusammengesetzt ist, können die beiden Lenker in gewissem Umfange unabhängig voneinander verdreht werden. Dies bedeutet insbesondere, daß die Vertikalbewegung der zu behandelnden Gegenstände nunmehr in nahezu beliebiger Weise mit einer Drehbewegung um eine horizontale Achse gekoppelt werden kann. Vertikalund Drehbewegung sind vollständig unabhängig voneinander und zudem auch unabhängig von der Translationsbewegung, welche die Gegenstände durch die Fördereinrichtung erfahren. Die gewählte Kinematik kann in optimaler Weise an die jeweilige Geometrie der zu behandelnden Gegenstände angepaßt werden. Bei Fahrzeugkarosserien kann beispielsweise der Eintauchvorgang so gestaltet werden, daß eine optimale Anströmung der verschiedenen inneren und äußeren Flächen sowie eine gute Entlüftung der inneren Hohlräume gewährleistet ist.

Die beiden Lenkglieder des einen Lenkers können gelenkig, bevorzugt aber linear verschieblich miteinander verbunden sein. In beiden Fällen geben sie dem entsprechenden Lenker den zu seiner unabhängigen Verdrehung erforderlichen Freiheitsgrad.

Zweckmäßigerweise umfaßt die Verbindungsstruktur zwei Lenkgestänge der oben beschriebenen Art, die in Abstand voneinander parallel zueinander angeordnet sind. Die Bewegung der beiden Lenkgestänge wird in diesem Falle in geeigneter Weise synchronisiert.

Besonders günstig dabei ist, wenn die beiden Lenkgestänge parallel zur Transportrichtung der Fördereinrichtung angeordnet sind. In diesem Falle können sich alle zur Fördertechnik gehörenden Komponenten seitlich der Bäder befinden, so daß diese durch von der Fördertechnik herabfallende oder herabtropfende Verunreinigungen nicht verschmutzt werden können.

Ein Ausführungsbeispiel der Erfindung wird nachfolgend anhand der Zeichnung näher erläutert; es zeigen
- Figur 1:: einen perspektivischen Ausschnitt aus einer Tauchlackieranlage für Fahrzeugkarosserien;
- Figur 2:: einen Schnitt durch die Anlage von Figur 1 senkrecht zur Bewegungsrichtung der Fahrzeugkarosserien, gesehen von rechts unten;

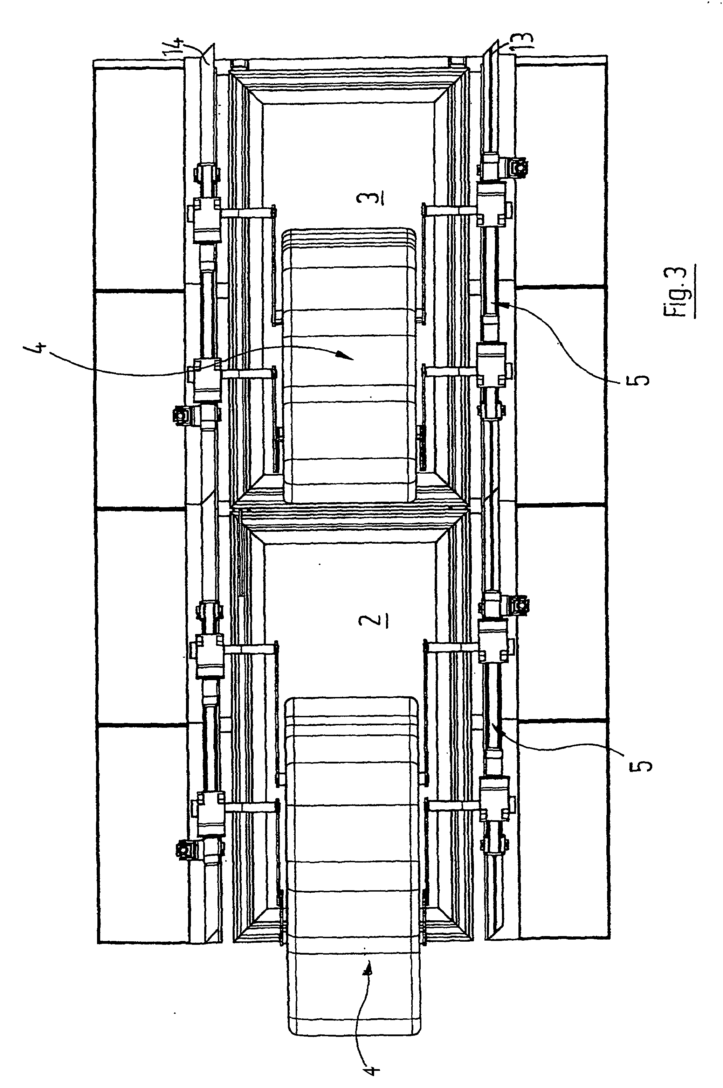

- Figur 3:: eine Draufsicht auf die Anlage von Figur 1;
- Figur 4:: eine Seitenansicht des Ausschnittes der Lackieranlage von Figur 1;
- Figur 5:: eine Seitenansicht eines Transportwagens, der in der Lackieranlage verwendet wird, mit einer hieran befestigten Fahrzeugkarosserie;
- Figur 6:: eine perspektivische Ansicht des Transportwagens samt Fahrzeugkarosserie von Figur 5;
- Figur 7:: eine Ansicht ähnlich der Figur 6, in welcher sich jedoch die Fahrzeugkarosserie in ihrer normalen Transportposition auf dem Transportwagen befindet;
- Figur 8:: eine vergrößerte Detailansicht im Bereich des mit dem Buchstaben A gekennzeichneten Kreises von Figur 2;
- Figur 9:: eine vergrößerte Detailansicht im Bereich des mit dem Buchstaben B gekennzeichneten Kreises von Figur 2.

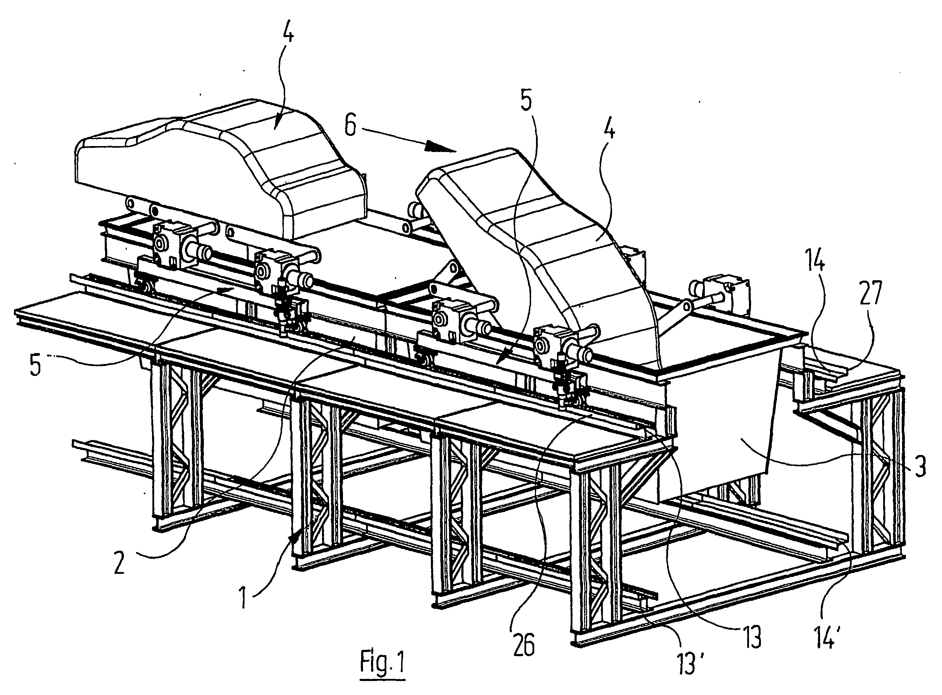

Die in der Zeichnung dargestellte Tauchlackieranlage für Fahrzeugkarosserien umfaßt eine eine Vielzahl von senkrechten Ständern und horizontalen Trägern aufweisende Stahlkonstruktion 1, in der zwei Badbehälter 2, 3 aufgehängt sind. Die Badbehälter 2, 3 sind bis zu einem bestimmten Spiegel mit flüssigem Lack angefüllt, in welche Fahrzeugkarossieren 4 eingetaucht werden sollen. Diese Fahrzeugkarosserien 4 werden hierzu mit Hilfe von einzelnen Transportwagen 5 in Richtung des Pfeiles 6 (vgl. Figur 1) transportiert, wobei diese Translationsbewegung der einzelnen Transportwagen 5 unabhängig voneinander erfolgen kann und im Zuge dieser unabhängigen Bewegungen Verlangsamungen, Beschleunigungen, Stopps und auch Bewegungsumkehrungen möglich sind. Insgesamt erfolgt jedoch ein Transport der Fahrzeugkarosserien 4 in Richtung des Pfeiles 6 von Figur 1.

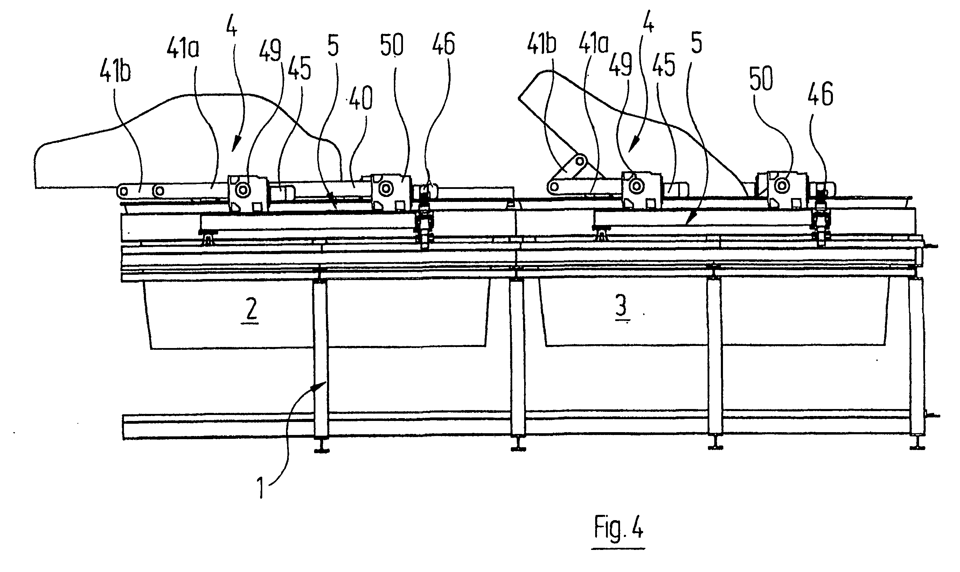

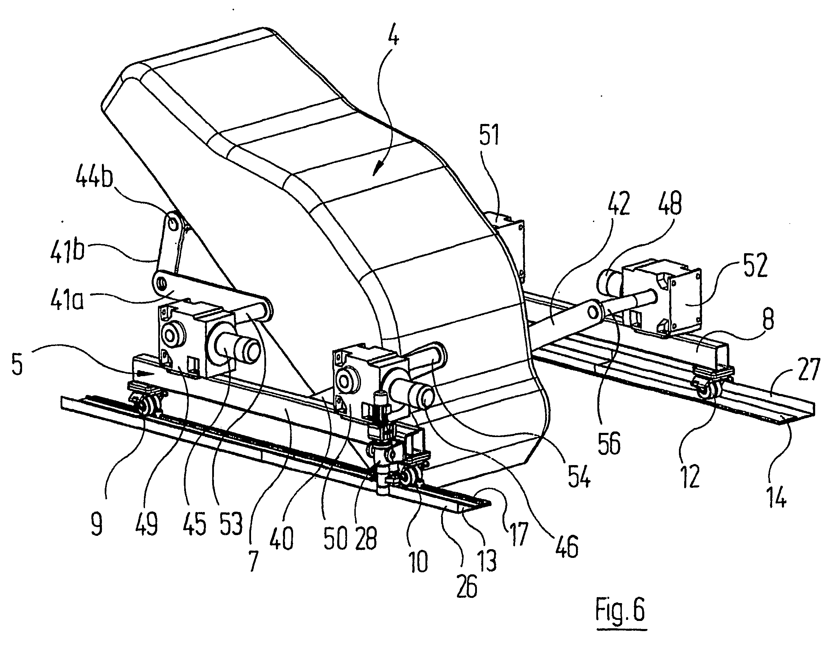

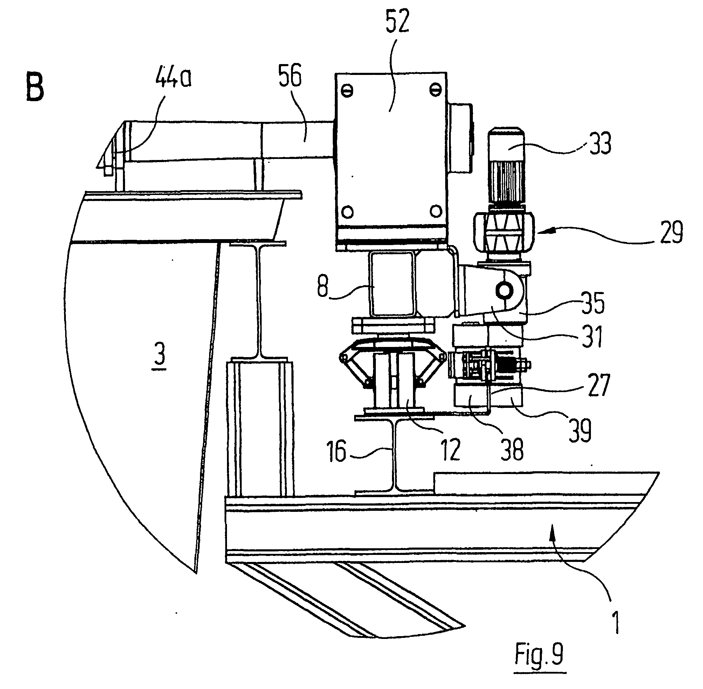

Die genaue Bauweise der Transportwagen 5 ist in den Figuren 4 bis 9 näher dargestellt. Wie insbesondere die Figur 6 zeigt, besitzt jeder Transportwagen 5 zwei Längstraversen 7, 8, an deren Unterseite jeweils zwei Doppelräder 9, 10 bzw. 11, 12 um eine horizontale Achse drehbar gelagert sind. Zusätzlich sind die Räder 9 bis 12 jeweils mit Hilfe eines in Einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

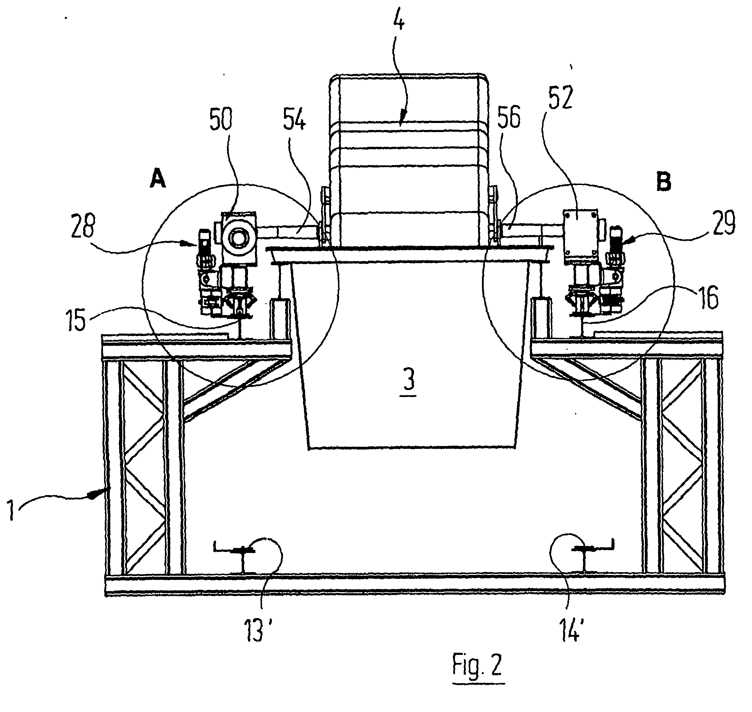

Die Doppelräder 9, 10 rollen auf einer ersten Lauffläche 13 und die Doppelräder 11, 12 auf einer hierzu parallen zweiten Lauffläche 14 ab. Die Laufflächen 13, 14 sind ihrerseits auf jeweils einem I-Profilträger 15, 16 montiert der von dem Stahlbau 1 getragen wird (vgl. insbesondere Figur 2).

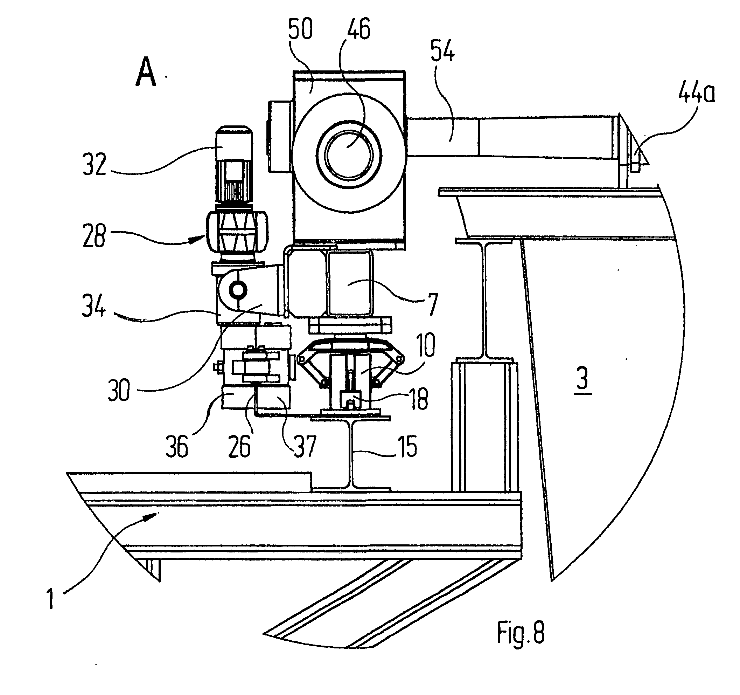

In der Mitte der in Figur 6 unteren, ersten Lauffläche 13 ist eine Führungsrippe 17 angebracht, die von eine komplementäre Ausnehmung aufweisenden Führungsgliedern 18 (vgl. Figur 8) übergriffen wird. Jeweils ein Führungsglied 18 ist mit dem Drehschemel eines zugeordneten Doppelrads 9 bzw. 10 so verbunden, daß es dieses Doppelrad 9 bzw. 10 entsprechend dem Verlauf der Führungsrippe 17 um die vertikale Achse verdreht. Auf diese Weise folgen die Doppelräder 9, 10 der ersten Lauffläche 13. Die der zweiten, in Figur 6 oberen Lauffläche 14 zugeordneten Doppelräder 11, 12 dagegen sind als reine Nachlaufräder konzipiert; das heißt, es sind keine gesonderten Führungsmittel zur Beeinflussung der Winkellage der Räder um deren vertikale Drehachse vorgesehen. Auf diese Weise können die Genauigkeitsanforderungen an die Führungsmittel, mit denen die Transportwagen 5 auf den Laufflächen 13, 14 gehalten werden, gering gehalten werden.

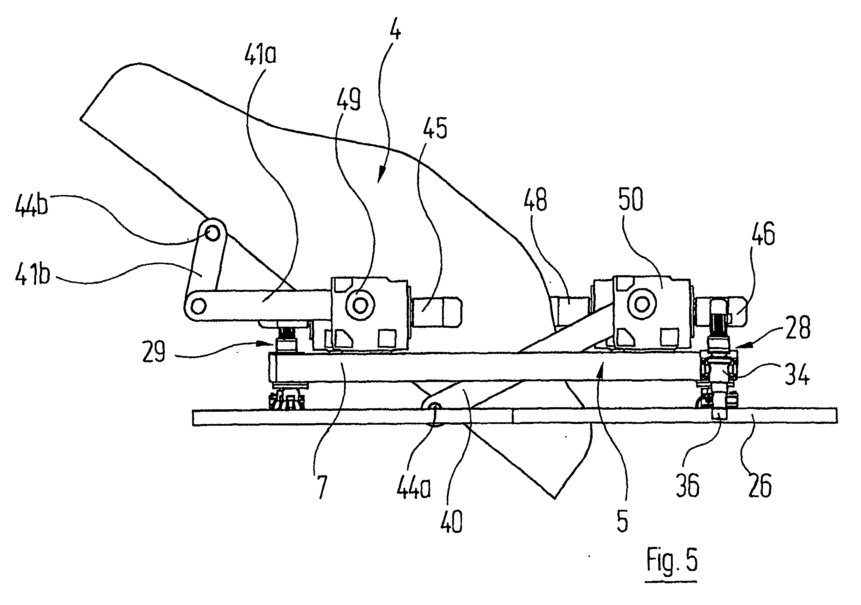

Die Fahrzeugkarosserien 4 werden auf den Transportwagen 5 mit Hilfe einer Eintauchvorrichtung getragen, die beidseits der Fahrzeugkarosserien 4 jeweils ein Lenkgestänge umfaßt. Jedes dieser Lenkgestänge besitzt einen in Bewegungsrichtung vorderen Lenker 40 und einen in Bewegungsrichtung hinteren Lenker 41. Der vordere Lenker 40 des in den Figuren 5 bis 7 vorderen Lenkgestänges ist mit einem Ende an einer vorderen Quertraverse 44a angelenkt, die sich unter der Fahrzeugkarosserie 4 hindurch bis zum entsprechenden Ende des vorderen Lenkers 42 des in diesen Figuren hinteren Lenkgestänges hindurcherstreckt. Das andere Ende der beiden vorderen Lenker 40, 42 ist jeweils starr mit der Ausgangswelle 54, 56 eines Getriebeblockes 50 bzw. 52 verbunden, an den jeweils ein Elektromotor 46 bzw. 48 angeflanscht ist. Durch Bestromen der Elektromotoren 46, 48 kann somit die Winkelstellung der beiden zueinander parallel ausgerichteten vorderen Lenker 40, 42 und damit die Höhenposition der Fahrzeugkarosserie 4 an der Stelle der vorderen Quertraverse 44a verändert werden.

Die hinteren Lenker 41, 43 der beiden Lenkgestänge sind jeweils aus zwei Lenkgliedern 41a, 41b zusammengesetzt, die gelenkig miteinander verbunden sind. Das zweite Ende des einen Lenkgliedes 41a bzw. 43a der beiden hinteren Lenker 41 bzw. 43 ist wiederum jeweils starr mit einer Ausgangswelle 53 bzw. 55 eines Getriebeblocks 49 bzw. 51 verbunden, an die ebenfalls jeweils ein Elektromotor 45 bzw. 47 angeflanscht ist. Erneut verlaufen die Lenkglieder 41a, 41b des Lenkgestänges auf der einen Seite der Fahrzeugkarosserie 4 parallel zu den entsprechenden Lenkgliedern 43a und 43b des Lenkgestänges auf der anderen Seite der Fahrzeugkarosserie 4.

Die beiden Quertraversen 44a, 44b bilden zusammen eine Tragstruktur für die Fahrzeugkarosserie 4; sie können durch eine zusätzliche, in der Zeichnung nicht dargestellte Längstraverse miteinander verbunden sein.

Die Doppelräder 19 bis 12 der Transportwagen 5 sind selbst nicht angetrieben. Der Vorwärtstrieb der Transportwagen 5 erfolgt vielmehr über einen gesonderten Antrieb, der nachfolgend anhand der Figuren 6 bis 9 näher erläutert wird.

Parallel zu den beiden Laufflächen 13, 14 erstrecken sich zwei senkrecht ausgerichtete, stationäre Antriebsflansche 26, 27. Diese wirken jeweils mit einem Preßrollenantrieb 28 bzw. 29 zusammen, der an der Seitenfläche der benachbarten Längstraverse 7, 8 mittels einer Lasche 30 bzw. 31 befestigt ist. Die Preßrollenantriebe 28, 29 umfassen jeweils einen elektrischen Antriebsmotor 32, 33 und ein Antriebsgetriebe 34, 35. Letzteres treibt die parallelen, vertikalen Achsen zweier Preßrollen 36, 37 bzw. 38, 39 an, die von beiden Seiten her gegen den jeweils zugeordneten Antriebsflansch 26 bzw. 27 angepreßt werden. Werden die Antriebsmotoren 32, 33 bestromt, laufen die Preßrollen 36, 37 bzw. 38, 39 auf den jeweiligen Seitenflächen der Antriebsflansche 26, 27 ab und bewegen dabei den Transportwagen 5 auf den Laufflächen 13, 14 vorwärts.

Jeder Transportwagen 5 umfaßt seine eigene Wagensteuerung, unter deren Regime er sowohl seine Translationsbewegung entlang der Laufflächen 13, 14 als auch die Eintauchbewegung der Fahzeugkarosserien 4 ausführt.

Die Funktion der oben beschriebenen Tauchlackieranlage insgesamt ist wie folgt:

Die zu lackierenden Fahrzeugkarosserien 4 werden jeweils auf einen eigenen Transportwagen 5 aufgesetzt und so den Bädern 2, 3 nacheinander zugeführt. Hat das vorauseilende Ende einer Fahrzeugkarosserie 4 den Beginn des in Transportrichtung 6 ersten Bades 2 erreicht, entscheidet die Wagensteuerung, ob diese Fahrzeugkarosserie 4 in dieses Bad 2 eingetaucht werden soll. Wird dies bejaht, wird der Eintauchvorgang eingeleitet. Dieser kann mit Hilfe der beiden Lenkgestänge in sehr unterschiedlichen Kinematiken durchgeführt werden. Ein Beispiel hierfür ist in den Figuren 5 bis 7 dargestellt.

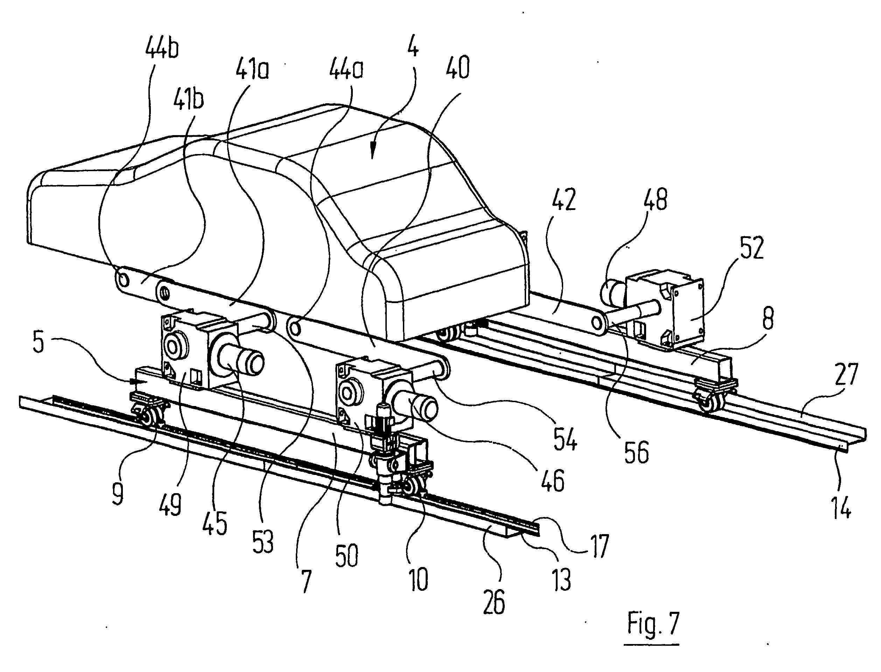

Zunächst sei auf Figur 7 Bezug genommen. In dieser stehen sowohl die vorderen Lenker 40, 42 als auch die hinteren Lenker 41, 43 der beiden Lenkgestänge horizontal; damit ist auch die die beiden Quertraversen 44a, 44b umfassende Tragstruktur und die von dieser gehaltenen Fahrzeugkarosserie 4 horizontal. Dies ist die Position, in welcher die Fahrzeugkarosserien 4 außerhalb der Bäder 2, 3 bewegt werden. In den Figuren 5 und 6 wurden nunmehr gegenüber der in Figur 7 dargestellten "Normalposition" die vorderen Lenker 40, 42 der beiden Lenkgestänge gegen den Uhrzeigersinn durch entsprechende Bestromung der Motoren 46, 48 etwas verdreht, während die zu den hinteren Lenkern 41, 43 gehörenden Lenkglieder 41a, 43a in ihrer Position unverändert geblieben sind. Die zweiten, zu den hinteren Lenkern 41 bzw. 43 gehörenden Lenkglieder 41b, 43b werden bei diesem Vorgang zwangsläufig im Uhrzeigersinn nach oben verschwenkt, da der Abstand zwischen den Quertraversen 44a, 44b selbstverständlich konstant bleibt.

Im wesentlichen läuft dies auf eine Drehung der Fahrzeugkarosserie 4 um eine im wesentlichen horizontale Achse hinaus.

Eine vollständig andere Bewegungskinematik läßt sich erzielen, wenn nicht nur die vorderen Lenker 40, 42 sondern gleichzeitig die hinteren Lenker 41, 43 durch die entsprechenden Elektromotoren 45, 47 in ihrer Winkelposition verändert werden. Die Bewegungsmöglichkeiten reichen von einer Bewegungsführung der Fahrzeugkarosserien 4, die derjenigen einer Parallelogrammführung entspricht, bis zu sehr unterschiedlichen Formen der Überlagerung einer Translations- mit einer Drehbewegung. Die vorderen Lenker 40, 42 und die hinteren Lenker 41, 43 können dabei in dem Umfange, in dem die hinteren Lenkglieder 41b, 43b den notwendigen Ausgleich liefern, unabhängig voneinander verdreht werden. Sowohl die Verdrehung der vorderen Lenker 40, 42 also auch diejenige der hinteren Lenker 41, 43 ist darüber hinaus vollständig unabhängig von der Translationsbewegung, welche die einzelnen Transportwagen 5, auf denen die Fahrzeugkarosserien 4 gehalten sind, entlang der Transportrichtung 6 erfahren.

Je nach Wunsch kann die Translationsbewegung des Transportwagens 5 bei eingetauchter Fahrzeugkarosserie 4 verlangsamt oder angehalten und die Fahrzeugkarosserie 4 einer Schaukelbewegung unterzogen werden, indem die Elektromotoren 45 bis 48 enstprechend bestromt werden. Nach der gewünschten Verweilzeit im Bad 2 wird die Fahrzeugkarosserie 4 durch Betätigung der Elektromotoren 45 bis 48 wieder aus dem Bad 2 herausgehoben, was erneut in einer ganz speziellen Kinematik geschehen kann, die der Kinematik des Eintauchvorgangs nicht ähnlich zu sein braucht.

Bei Bedarf kann die Fahrzeugkarosserie 4 oberhalb des Bades 2 durch entsprechende Bestromung der Elektromotoren 45 bis 48 in unterschiedliche Winkelpositionen gebracht werden, um ein möglichst vollständiges Auslaufen und Abtropfen des Lacks in das zugeordnete Bad 2 zu ermöglichen und auf diese Weise die Verschleppung von Lack zu minimieren. Sodann wird durch Betätigung der Preßrollenantriebe 28, 29 die Translationsbewegung des Transportwagens 5 wieder aufgenommen, ggfs. mit höherer Geschwindigkeit, bis die Fahrzeugkarosserie 4 das in Bewegungsrichtung zweite Bad 3 erreicht hat. Dort können dieselben Vorgänge erneut ablaufen, wie dies für das erste Bad 2 beschrieben wurde.

In bestimmten Lackieranlagen folgen unterschiedliche Fahrzeugkarosserien 4 aufeinander, die in unterschiedlicher Weise behandelt werden müssen. Dies ist mit der beschriebenen Lackieranlage ohne weiteres möglich. Beispielsweise kann ein Bad 2, 3 vollständig überfahren werden; die Fahrzeugkarosserie 4 kann auch mit einer rückwärts gerichteten, kombinierten Dreh- und Translationsbewegung in das fragliche Bad 2, 3 eingetaucht werden.

Da, wie erwähnt, aufeinanderfolgende Fahrzeugkarosserien 4 in unterschiedlicher Weise in den Bädern 2, 3 behandelt werden können, können sich unterschiedliche Abstände zwischen aufeinanderfolgenden Transportwagen 5 einstellen. Diese unterschiedlichen Abstände können auf Wunsch durch entsprechende Beschleunigung bzw. Verzögerung aufeinanderfolgender Transportwagen 5 wieder vergleichmäßigt werden.

Am Anfang der Lackieranlage befindet sich eine nicht dargestellte Aufgabestation, an welcher die einzelnen Fahrzeugkarosserien 4 auf einen stehenden Transportwagen 5 aufgesetzt und an diesem befestigt werden. In entsprechender Weise befindet sich am Ende der Lackieranlage eine Abnahmestation, an welcher die Fahrzeugkarosserien 4 von einem stehenden Transportwagen 5 abgenommen werden. Sowohl die Aufgabe- als auch die Abnahmestation sind als Hubstationen ausgebildet. In der Abnahmestation wird der entleerte Transportwagen 5 nach unten abgesenkt, bis die Laufflächen 13, 14, die sich auch in die Abnahmestation hinein fortsetzen, mit parallelen Laufflächen 13', 14' fluchten, die sich in einem Untergeschoß des Stahlbaues 1 zurück bis zur Aufgabestation erstrecken. Die leeren Transportwagen 5 werden auf diesen Laufflächen 13', 14' unterhalb der Bäder 2, 3 entgegen der Richtung des Pfeils 6 zur Aufgabestation gebracht, was mit einer höheren Geschwindigkeit geschehen kann. In der Aufgabestation werden die Transportwagen 5 wieder auf das Niveau der oberen Laufflächen 13, 14 gebracht und, wie schon beschrieben, mit neuen zu lackierenden Fahrzeugkarosserien 4 bestückt.

Selbstverständlich können die Transportwagen 5 auch auf eine andere Art wieder zum Einlaß der Anlage zurückgebracht werden.

Wie insbesondere der Figur 1 zu entnehmen ist, befinden sich sämtliche Fördertechnikkomponenten der beschriebenen Lackieranlage seitlich von den Bädern 2, 3, so daß die in den Bädern 2, 3 befindlichen Flüssigkeiten von diesen Fördertechnikkomponenten nicht verschmutzt werden können.

Bei dem oben beschriebenen und in der Zeichnung dargestellten Ausführungsbeispiel sind die hinteren Lenker 41, 43 der Transportwagen 5 jeweils aus zwei Lenkgliedern 41a, 41b, 43a, 43b zusammengesetzt, die gelenkig miteinander verbunden sind. Der für die unabhängige Verdrehbarkeit der hinteren Lenker erforderliche Freiheitsgrad wird bei einer nicht dargestellten Ausführungsform der Erfindung dadurch gewährleistet, daß die entsprechenden Lenker zwei Lenkglieder umfassen, die linear verschieblich miteinander verbunden sind, derart, daß diese Lenker ihre effektive Länge verändern können.

## Patentansprüche

1. Anlage zum Behandeln, insbesondere zum Lackieren, von Gegenständen (4), insbesondere von Fahrzeugkarosserien (4) mit
a) mindestens einem Bad (2, 3) in dem sich eine Behandlungsflüssigkeit, insbesondere ein Lack, befindet, in welche die Gegenstände (4) eingetaucht werden sollen;
b) einer Fördereinrichtung (5), mit welcher die Gegenstände (4) in einer kontinuierlichen oder intermittierenden Translationsbewegung durch die Anlage geführt werden können;
c) einer Vielzahl von Eintaucheinrichtungen, die auf einer über eine Verbindungsstruktur mit der Fördereinrichtung (5) verbundenen Tragstruktur jeweils einen Gegenstand (4) tragen und in der Lage sind, diesen Gegenstand (4) in das Bad (2, 3) einzutauchen,
**dadurch gekennzeichnet, daß**
d) die Verbindungsstruktur mindestens ein Lenkgestänge aufweist, das seinerseits umfaßt:
da) zwei in Abstand von einander angeordnete Lenker (40, 41, 42, 43), die am einen Ende gelenkig mit der Fördereinrichtung (5) und am anderen Ende gelenkig mit der Tragstruktur (44) verbunden sind;
db) mindestens eine Einrichtung (45 bis 52), mit welcher mindestens einer der beiden Lenker (40, 41, 42, 43) des Lenkgestänges um seine Anlenkachse an der Fördereinrichtung (5) verdreht werden kann.

2. Anlage nach Anspruch 1, **dadurch gekennzeichnet, daß** einer (41, 43) der beiden Lenker (40, 41, 42, 43) des Lenkgestänges aus zwei relativ zueinander beweglichen Lenkgliedern (41a, 41b, 43a, 43b) besteht und daß beiden Lenkern (40, 41, 42, 43) jeweils eine Einrichtung (42 bis 52) zugeordnet ist, mit welcher der jeweilige Lenker (40, 41, 42, 43) unabhängig vom anderen Lenker (40, 41, 42, 43) um seine Anlenkachse an der Fördereinrichtung (5) verdreht werden kann.

3. Anlage nach Anspruch 2, **dadurch gekennzeichnet, daß** die beiden Lenkglieder (41a, 41b, 43a, 43b) gelenkig miteinander verbunden sind.

4. Anlage nach Anspruch 2, **dadurch gekennzeichnet, daß** die beiden Lenkglieder linear verschieblich miteinander verbunden sind.

5. Anlage nach einem der vorhergehenden Ansprüche, **dadurch gekennzeichnet, daß** die Verbindungsstruktur zwei Lenkgestänge aufweist, die in Abstand voneinander und parallel zueinander angeordnet sind.

6. Anlage nach Anspruch 5, **dadurch gekennzeichnet, daß** die beiden Lenkgestänge parallel zur Transportrichtung der Fördereinrichtung (5) angeordnet sind.

## Claims

1. An installation for treating, in particular for painting, objects (4), in particular vehicle bodies (4), having
a) at least one bath (2,3) in which there is a treatment fluid, in particular paint, in which the objects (4) are to be immersed;
b) a conveyor device (5) by means of which the objects (4) can be guided through the installation in a continuous or intermittent translatory movement;
c) a plurality of immersion devices which each support an object (4) on a supporting structure connected to the conveyor device (5) by way of a connecting structure and are able to immerse this object (4) in the bath (2,3),
**characterised in that**
d) the connecting structure has at least one steering linkage which in turn comprises:
da) two steering means (40, 41, 42, 43) which are arranged at a distance from one another and are connected in articulated manner to the conveyor device (5) at one end and in articulated manner to the supporting structure (44) at the other end;
db) at least one device (45 to 52) by means of which at least one of the two steering means (40, 41, 42, 43) of the steering linkage can be rotated about the axis produced by its articulated connection to the conveyor device (5).

2. An installation according to Claim 1, **characterised in that** one (41, 43) of the two steering means (40, 41, 42, 43) of the steering linkage comprises two steering elements (41a, 41b, 43a, 43b) which are movable relative to one another, and **in that**, associated with both steering means (40, 41, 42, 43), there is in each case a device (42 to 52) by means of which the particular steering means (40, 41, 42, 43) can be rotated about the axis produced by its articulated connection to the conveyor device (5) independently of the other steering means (40, 41, 42, 43).

3. An installation according to Claim 2, **characterised in that** the two steering elements (41a, 41b, 43a, 43b) are mutually connected in articulated manner.

4. An installation according to Claim 2, **characterised in that** the two steering elements are mutually connected in linearly displaceable manner.

5. An installation according to one of the preceding claims, **characterised in that** the connecting structure has two steering linkages, which are arranged at a distance from one another and parallel to one another.

6. An installation according to Claim 5, **characterised in that** the two steering linkages are arranged parallel to the transport direction of the conveyor device (5).

## Revendications

1. Installation de traitement, notamment de mise en peinture d'objets (4), en particulier des carrosseries (4) de véhicules, comprenant
a) au moins un bain (2, 3) dans lequel se trouve un liquide de traitement, notamment une laque dans laquelle les objets (4) sont destinés à être plongés ;
b) un dispositif de convoyage (5) par lequel les objets (4) peuvent être menés à travers l'installation, en un mouvement translatoire continu ou intermittent ;
c) une multiplicité de dispositifs d'immersion qui portent respectivement un objet (4), sur une structure de support reliée au dispositif de convoyage (5) par l'intermédiaire d'une structure de solidarisation, et sont en mesure de plonger cet objet (4) dans le bain (2, 3),
**caractérisée par le fait que**
d) la structure de solidarisation présente au moins une tringlerie de guidage comprenant, à son tour :
da) deux biellettes (40, 41, 42, 43) situées à distance l'une de l'autre, qui sont reliées de manière articulée au dispositif de convoyage (5), par l'une des extrémités, et à la structure de support (44) par l'autre extrémité ;
db) au moins un système (45 à 52) à l'aide duquel au moins l'une des deux biellettes (40, 41, 42, 43) de la tringlerie de guidage peut être animée d'une rotation autour de son axe d'articulation sur le dispositif de convoyage (5).

2. Installation selon la revendication 1, **caractérisée par le fait que** l'une (41, 43) des deux biellettes (40, 41, 42, 43) de l'articulation de guidage se compose de deux organes articulés (41a, 41b, 43a, 43b) mobiles l'un par rapport à l'autre ; et **par le fait que** les deux biellettes (40, 41, 42, 43) sont respectivement associées à un système (42 à 52) à l'aide duquel la biellette considérée (40, 41, 42, 43) peut être animée d'une rotation, indépendamment de l'autre biellette (40, 41, 42, 43), autour de son axe d'articulation sur le dispositif de convoyage (5).

3. Installation selon la revendication 2, **caractérisée par le fait que** les deux organes articulés (41a, 41b, 43a, 43b) sont reliés l'un à l'autre de manière articulée.

4. Installation selon la revendication 2, **caractérisée par le fait que** les deux organes articulés sont reliés l'un à l'autre avec faculté de coulissement linéaire.

5. Installation selon l'une des revendications précédentes, **caractérisée par le fait que** la structure de solidarisation comprend deux tringleries de guidage disposées à distance l'une de l'autre, et parallèlement l'une à l'autre.

6. Installation selon la revendication 5, **caractérisée par le fait que** les deux tringleries de guidage sont agencées parallèlement à l'axe de transport du dispositif de convoyage (5).
